# EUROPEAN PATENT SPECIFICATION

(11) **EP 3 736 427 B1**
(45) Date of publication and mention of the grant of the patent: **28.02.2024**
(21) Application number: 19212195.2
(22) Date of filing: 28.11.2019
(51) Int. Cl.: F02C 7/32, F02K 7/10, F02K 9/00, F02C 6/06, F02C 6/16, F01D 15/10

(54) **POWER MODULES FOR HYPERSONIC VEHICLES**
LEISTUNGSMODULE FÜR HYPERSCHALLFAHRZEUGE
MODULES DE PUISSANCE POUR VÉHICULES HYPERSONIQUES

(30) Priority: 10.05.2019 US 201916409307
(43) Date of publication of application: 11.11.2020
(73) Proprietor: Hamilton Sundstrand Corporation, Charlotte, NC 28217-4578 (US)
(72) Inventor: HIMMELMANN, Richard A., Beloit, WI Wisconsin 53511 (US)
(74) Representative: Dehns

(56) References cited:
- DE-A1- 2 642 347
- US-A- 4 777 793
- US-A- 4 864 812
- US-A1- 2016 010 485

## Description

### BACKGROUND

The subject matter disclosed herein generally relates to electrical systems, and more specifically to generating electrical power for electrical systems.

Hypersonic vehicles commonly employ rocket and scramjet engines for propulsion. Rocket engines operate by flowing a flow of high pressure gases through a nozzle, which converts the internal energy on high pressure gases into a propulsive force according to the geometry of the nozzle. Scramjet engines operate combusting fuel in a supersonic airflow, supersonic airflow provided by the forward velocity of the vehicle, which allow the engine to decelerates the air such that pressure and temperature increase. Fuel is introduced into the pressurized and heated air, the mixture ignited, and the resulting high pressure combustion product communicated to a nozzle. The nozzle generates thrust using the high pressure combustion products.

Rockets and scramjet engines generally do not employ rotating components suitable to supply mechanical rotation to generators and hydraulic pumps. It is therefore necessary for a hypersonic vehicles to carry an auxiliary power unit (APU) device to generate power for electrical and hydraulic devices carried by the vehicle. Examples of such APU devices include combustion gas powered APU devices, cold gas powered APU devices, and APU devices with dedicated fuel supplies. Hot gas APU devices typically generate power using hot gases extracted from the engine. Cold gas powered APU devices generally route compressed fuel or propellant, such as helium or hydrogen gas carried by the vehicle, through a cold-gas turbine to generate electric power. Dedicated fuel APU devices typically carry a supply of fuel dedicated for the APU device, typically with a fuel system separate and apart from that which supplies the engine. Each of these approaches require that the vehicle carry fuel sufficient for operation of the APU device during flight of the vehicle.

Such systems and methods have generally been satisfactory for their intended purpose. However, a need remains for improved power modules, vehicles, and power generation methods. The present disclosure provides a solution to this need. US 4,777,793 describes an emergency power unit. US4,864,712 describes a combined auxiliary and emergency power unit. DE 26 42 3547 A1 describes a gas turbine.

### BRIEF SUMMARY

A power module for hypersonic vehicles with a scramjet engine is described herein and defined in claim 1.

In addition to one or more of the features described above, further embodiments may include a scramjet engine connected to the propellant selector valve by the bleed air conduit.

In addition to one or more of the features described above, further embodiments may include that the scramjet engine has an inlet segment with a bleed port in fluid communication with a nozzle segment through a combustor segment and an isolator segment, wherein the bleed port is in fluid communication with the bleed air conduit.

In addition to one or more of the features described above, further embodiments may include a gas generator connecting the propellant selector valve to the turbo-generator.

In addition to one or more of the features described above, further embodiments may include that the gas generator comprises a decomposition chamber for decomposing a mono-propellant.

In addition to one or more of the features described above, further embodiments may include that the gas generator comprises a combustion chamber for combusting a bi-propellant with an oxidizer.

In addition to one or more of the features described above, further embodiments may include that the stored energy module comprises a pressure vessel, wherein the pressure vessel is connected to the propellant selector valve.

In addition to one or more of the features described above, further embodiments may include that the stored energy module further comprises a compressed gas contained within the pressure vessel.

In addition to one or more of the features described above, further embodiments may include that the stored energy module includes a mono-propellant contained within the pressure vessel, and a pressurization gas contained within the pressure vessel, the pressurization gas pressurizing the mono-propellant to urge the mono-propellant toward the propellant selector valve.

In addition to one or more of the features described above, further embodiments may include that the pressure vessel is a bi-propellant pressure vessel, the stored energy module including a bi-propellant contained within the bi-propellant pressure vessel, a pressurization gas pressure vessel connected to the bi-propellant pressure vessel and therethrough in fluid communication with the propellant selector valve, and a pressurization gas contained in the pressurization gas pressure vessel and the bi-propellant pressure, the pressurization gas urging the bi-propellant toward the propellant selector valve.

In addition to one or more of the features described above, further embodiments may include that the pressure vessel is a bi-propellant pressure vessel, the stored energy module further including an oxidizer pressure vessel connected to the propellant selector valve, a pressurization gas pressure vessel connected to the oxidizer pressure vessel and the bi-propellant pressure vessel, the pressurization gas pressure vessel in fluid communication with the turbine speed control valve through both the pressurization gas pressure vessel and the oxidizer pressure vessel.

In addition to one or more of the features described above, further embodiments may include that the propellant selector valve is configured to move between the first position and the second position according to energy within an inlet segment of a scramjet engine.

In another embodiment a vehicle is provided. The vehicle includes an airframe carrying a scramjet engine and a power module as described above, the scramjet engine connected to the propellant selector valve by the bleed air conduit, the stored energy module including a pressure vessel that is connected to the propellant selector valve, and the propellant selector valve configured to move from the first position to the second position when energy within an inlet segment of the scramjet engine exceeds a predetermined value.

In addition to one or more of the features described above, further embodiments the vehicle may include a compressed gas, a mono-propellant and a pressurization gas, or a bi-propellant and a pressurization gas contained within the pressure vessel.

A method of generating electrical power is described herein and defined in claim 11.

In addition to one or more of the features described above, further embodiments may include the diverter element is moved between the first position and the second position based on speed of a vehicle carrying the power module.

Technical effects of embodiments of the present disclosure include the capability to generate hydraulic and/or electrical power on a vehicle that does not have a source of rotational power for a generator. In certain embodiments the amount of mono-propellant or fuel utilized for power generation on the vehicle is reduced by employing bleed air from the vehicle propulsion system.

These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF DRAWINGS

The following descriptions should not be considered limiting in any way. With reference to the accompanying drawings, like elements are numbered alike:

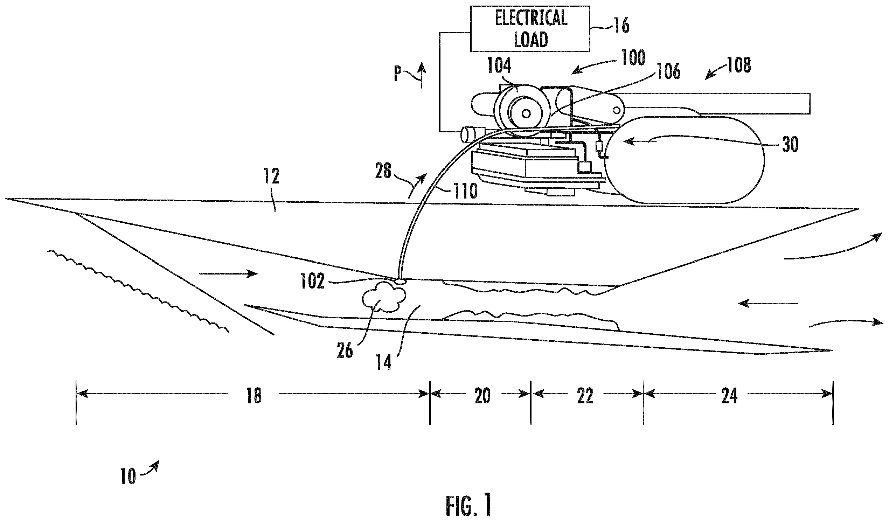

FIG. 1 illustrates a general schematic system diagram of vehicle having a power module constructed in accordance with the present disclosure, showing a power module with a propellant selector valve in fluid communication with both a stored energy module and a bleed air conduit to receive energy for power generation from either the stored energy module or a scramjet engine connected to the bleed air conduit;

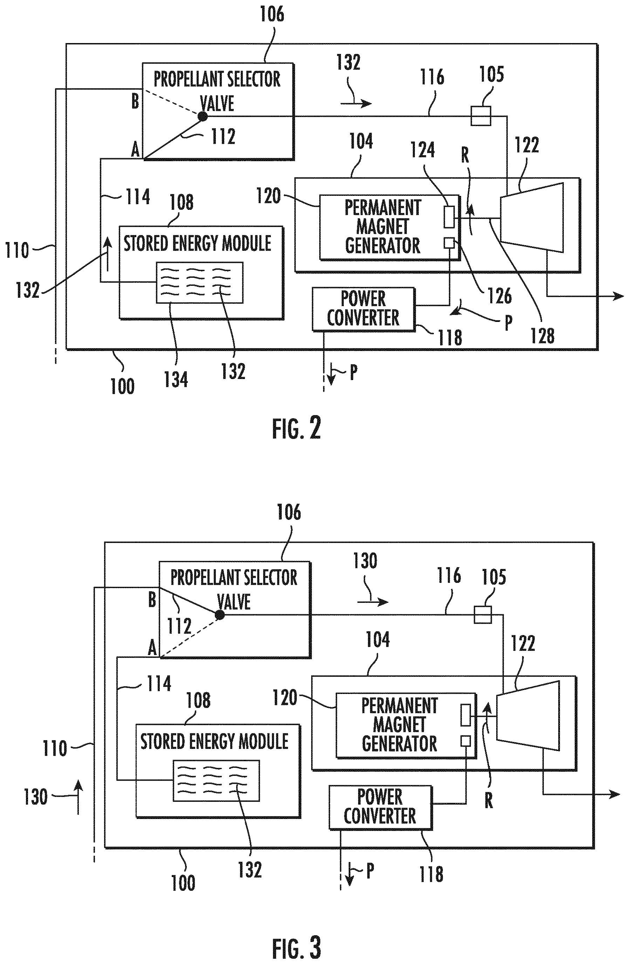

FIGS. 2 and 3 are schematic views of the power module of FIG. 1 according to one implementation, showing the power module generating electrical power using a flow of compressed gas provided by the stored energy module, and the power module generating electrical power using a flow of high pressure air provided by the scramjet engine, respectively;

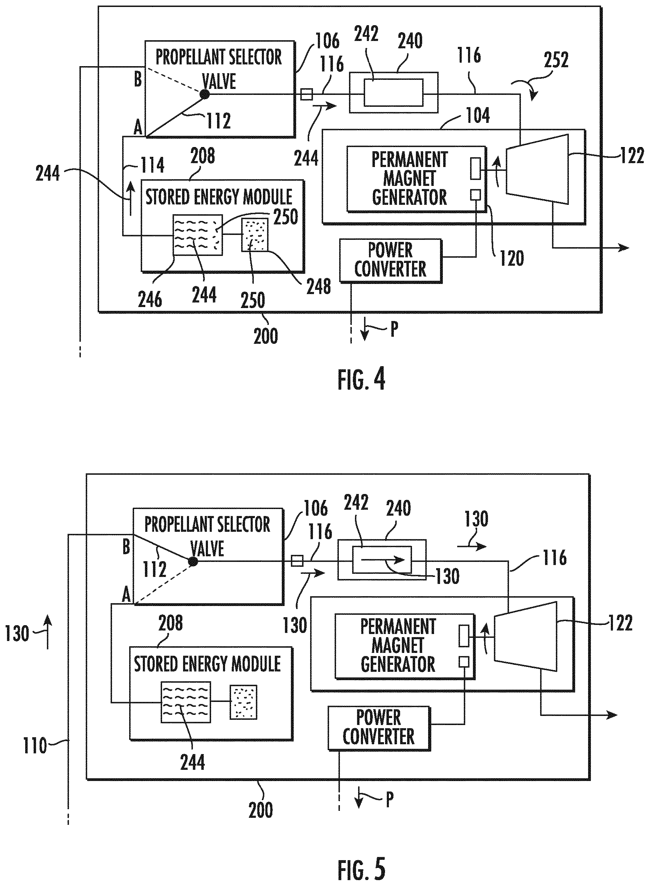

FIGS. 4 and 5 are schematic views of the power module of FIG. 1 according to another implementation, showing the power module generating electrical power using a flow of mono-propellant provided by the stored energy module, and the power module generating electrical power using a flow of high pressure air provided by the scramjet engine, respectively;

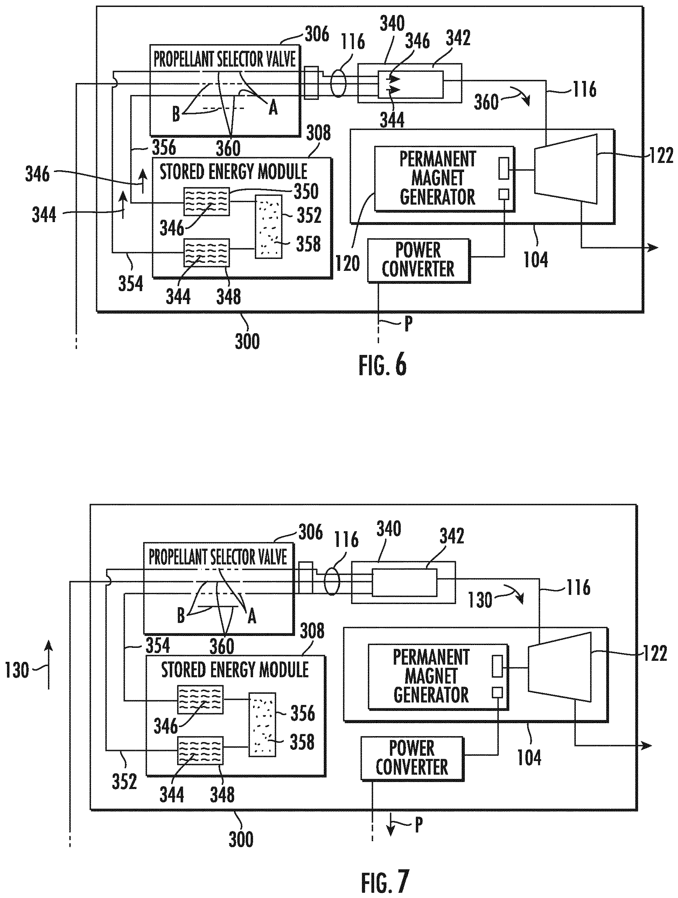

FIGS. 6 and 7 are schematic views of the power module of FIG. 1 according to a further implementation, showing the power module generating electrical power using flows of bi-propellant and oxidizer provided by the stored energy module, and the power module generating electrical power using a flow of high pressure air provided by the scramjet engine, respectively;

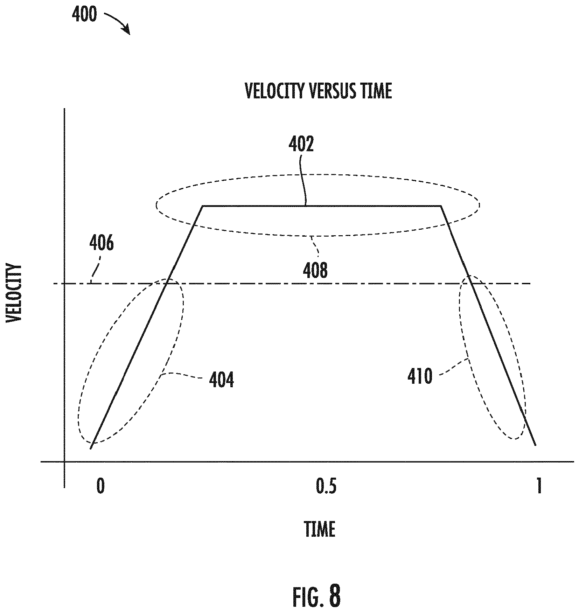

FIG. 8 is a chart showing cooperation between the stored energy module and the scramjet engine to generate electrical power with the power modules during flight regimes of a hypersonic vehicle; and

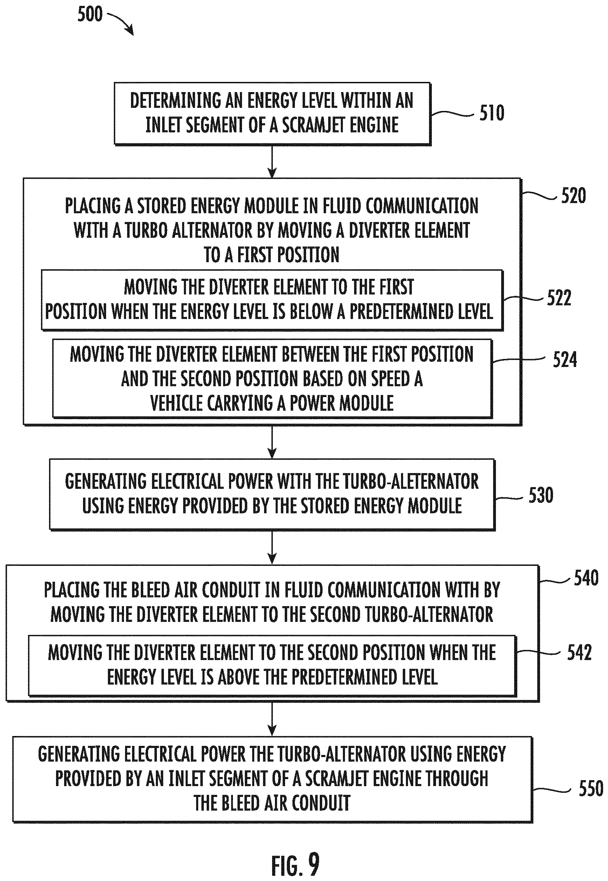

FIG. 9 is a block diagram of a method of generating electrical power, showing operations of the method.

### DETAILED DESCRIPTION

Reference will now be made to the drawings wherein like reference numerals identify similar structural features or aspects of the subject disclosure. For purposes of explanation and illustration, and not limitation, an exemplary embodiment of a power module in accordance with the disclosure is shown in FIG. 1 and is designated generally by reference character 100. Other embodiments of power modules, vehicles carrying power modules, and methods of generating electrical power in accordance with the present disclosure, or aspects thereof, are provided in FIGS. 2-9, as will be described. The systems and methods described herein can be used for generating electric power without an external source of mechanical rotation, such as on hypersonic vehicles employing scramjet engines, though the present disclosure is not limited to generating electrical power or to scramjet vehicles generally.

Referring to FIG. 1, a vehicle 10, e.g., a hypersonic aircraft, is shown. The vehicle 10 includes an airframe 12 carrying a scramjet engine 14, one or more electrical load 16, and the power module 100. The one or more electrical load 16 is electrically connected to the power module 100 to receive electrical power P therefrom and can include, for example, avionics, flight control devices, and/or communications equipment. The scramjet engine 14 is configured for propelling the vehicle 10 at hypersonic speeds and includes an inlet segment 18, an isolator segment 20, a combustor segment 22, and a nozzle segment 24. The nozzle segment 24 is in fluid communication with the inlet segment 18 through the combustor segment 22 and the isolator segment 20, and during operation the scramj et engine 14 maintains a supersonic airflow therethrough. A bleed port 102 is located within the isolator segment 20 at a high temperature and high pressure zone 26 for providing energy 28 from the scramjet engine 14 to the power module 100, as will be described.

The power module 100 includes a turbo-generator 104 with a propellant selector valve 106. The turbo-generator 104 is connected through the propellant selector valve 106 to both the stored energy module 108 and the scramjet engine 14, the scramjet being connecting to the propellant selector valve 106 through the bleed air conduit 110. The propellant selector valve 106 is arranged to place the turbo-generator 104 in fluid communication with either the stored energy module 108 or the scramjet engine 14 to generate the electrical power P according to the selected source of energy for turbo-generator 104. In the illustrated implementation the propellant selector valve 106 has a diverter element 112 (shown in FIG. 2) with a first position A (shown in FIG. 2) and a second position B (shown in FIG. 3).

While the diverter element 112 is in the first position A the propellant selector valve 106 connects the stored energy module 108 to the turbo-generator 104 to provide energy 30 to the turbo-generator from the stored energy module 108. While the diverter element 112 is in the second position B the propellant selector valve 106 connects the scramjet engine 14 (shown in FIG. 1) to the turbo-generator 104 through the bleed air conduit. The bleed air conduit is in fluid communication with the propellant selector valve 106 to provide energy 28 to the power module 100 from the scramj et engine 14. Although shown and described herein in the context of a propellant selector valve 106 having a diverter element 112 it is to be understood and appreciated that other types of propellant selector valves can be employed and remain within the scope of the present disclosure.

With reference to FIGS. 2 and 3, the power module 100 is shown. The power module 100 includes the turbo-generator 104, the propellant selector valve 106, the stored energy module 108, and the bleed air conduit 110. The power module 100 also includes the diverter element 112, a turbine control valve 105, a stored energy module conduit 114, a turbine feed conduit 116, and a power converter 118.

The power converter 118 is electrically connected to the turbo-generator 104 to receive electrical power from the turbo-generator 104. The power converter 118 is also connected to the electrical load 16 (shown in FIG. 1) and in this respect is configured to convert electrical power p received from the turbo-generator 104 into the electrical power P, which is of a form suitable for the electrical load 16 (shown in FIG. 1). In certain embodiments the power converter 118 includes rectifier circuitry configured to convert alternating current (AC) power into direct current (DC) power. In accordance with certain embodiments the power converter 118 includes circuitry configured to convert variable frequency AC power into constant frequency AC power, as suitable for an intended application.

The turbo-generator 104 includes a permanent magnet generator 120 and a turbine 122. The permanent magnet generator 120 is operatively associated with the turbine 122 and includes one or more permanent magnet 124 and one or more coil or stator winding 126. The one or more permanent magnet 124 is electromagnetically coupled to the one or more coil or stator winding 126. In this respect the permanent magnet generator 120 is configured to convert mechanical rotation R communicated to the permanent magnet generator 120 by the turbine 122 into the electrical power p by rotating the one or more permanent magnet 124 relative to the one or more coil or stator winding 126. In certain embodiments the turbo-generator 104 includes an interconnect shaft 128, which connects the turbine 122 to the permanent magnet generator 120 to communicate mechanical rotation R from the turbine 122 into the electrical power p. It is contemplated that the interconnect shaft 128 directly connect the turbine 122 to the permanent magnet generator 120, e.g., without an intervening gear train, simplifying the arrangement of the power module 100 by eliminating the need for an intervening gear assembly, such as an accessory gearbox.

The turbine 122 is operably connected to the permanent magnet generator 120 and is further connected to the propellant selector valve 106 by the turbine feed conduit 116. In this respect the turbine 122 is in fluid communication with the propellant selector valve 106 through the turbine feed conduit 116 and is configured to receive therefrom the energy 28 (shown in FIG. 1) or the energy 30 (shown in FIG. 1). More specifically, the energy 28 is communicated to the turbine 122 from the scramjet engine 14 (shown in FIG. 1) through a flow of high temperature and high pressure air 130 received from the inlet segment 18 (shown in FIG. 1) of the scramjet engine 14. The energy 30 is communicated to the turbine 122 through a flow of compressed gas 132 from the stored energy module 108. In both circumstances the turbine 122 expands the received flow of high temperature and high pressure air 130 or the flow of the compressed gas 132, extracts work therefrom, and communicates the work to the permanent magnet generator 120 as mechanical rotation R for generating the electric power P.

The stored energy module 108 includes one or more pressure vessel 134. The one or more pressure vessel 134 contains the compressed gas 132 and is connected to the propellant selector valve 106, and therethrough to the turbine 122. In this respect the stored energy module 108 is in fluid communication with the propellant selector valve 106 and is arranged to provide thereto a flow of the compressed gas 132 selectively, e.g., according to temperature and pressure conditions within the scramjet engine 14. In certain embodiments the compressed gas 132 can be compressed helium or compressed hydrogen, by way of non-limiting examples. Utilization of helium and/or hydrogen in the stored energy module 108 simplifies integration of the power module 100 into the vehicle 10 (shown in FIG. 1) due to its availability on certain types of hypersonic vehicles.

The propellant selector valve 106 includes the diverter element 112 and connects both the stored energy module conduit 114 and the bleed air conduit 110 to the turbine feed conduit 116. While in the first position A the diverter element 112, and thereby the propellant selector valve 106, fluidly connects the stored energy module conduit 114 to the turbine feed conduit 116. So connected, the stored energy module 108, and more particularly the one or more pressure vessel 134, provides a flow of the compressed gas 132 to the propellant selector valve 106. The propellant selector valve 106 in turn communicates the flow of the compressed gas 132 to the turbine 122 through the turbine feed conduit 116 via the turbine control valve 105, which is configured for throttling the flow of fluid flowing therethrough to control the turbine 122. As will be appreciated by those of skill in the art in view of the present disclosure, the flow of the compressed gas 132 in turn serves as the source of the mechanical rotation R, which causes the power module 100 to generate electric power P from the energy 30 (shown in FIG. 1). This allows the turbo-generator 104 to generate the electric power P during regimes wherein conditions in the scramjet engine 14 (shown in FIG. 1) are ill-suited to provide the energy 28, such as when the vehicle 10 is operating at subsonic speeds.

With reference to FIG. 3, the power module 100 is shown with the diverter element 112 in the second position B. While in the second position B the diverter element 112, and thereby the propellant selector valve 106, fluidly connects the bleed air conduit 110 to the turbine feed conduit 116. So connected a flow of the high temperature and high pressure air 130 from the inlet segment 18 (shown in FIG. 1) of the scramjet engine 14 (shown in FIG. 1) provides the energy 28 (shown in FIG. 1) to the turbo-generator 104 to generate the electrical power P. Specifically, the flow of the high temperature and high pressure air 130 flows through bleed air conduit 110, through the propellant selector valve 106, and to the turbine 122 through the turbine feed conduit 116. The turbine 122 in turn extracts work from the high temperature and high pressure air 130 and applies the extracted work as mechanical rotation R to the permanent magnet generator 120, thereby generating the electrical power P. As will be appreciated by those of skill in the art in view of the present disclosure, the flow of high temperature and high pressure air 130 supplements (and in certain embodiments replaces entirely) the flow of compressed gas 132 used to generate the electrical power P, allowing the stored energy module 108 to be commensurately smaller and lighter than otherwise required for a given power requirement during operation of the vehicle 10 (shown in FIG. 1).

With reference to FIGS. 4 and 5, a power module 200 is shown. The power module 200 is similar to the power module 100 (shown in FIG. 1) and additionally includes a propellant stored energy module 208 and a gas generator 240 having a decomposition chamber 242. The gas generator 240 is arranged along the turbine feed conduit 116 and fluidly connects the propellant selector valve 106 to the turbine 122. It is contemplated that the decomposition chamber 242 be configured and adapted to decompose a mono-propellant 244 communicated to the decomposition chamber 242 by the propellant selector valve 106. In this respect it is contemplated that the decomposition chamber 242 be configured to decompose the mono-propellant 244, provided by the stored energy module 208 to the decomposition chamber 242 by the propellant selector valve 106, into a flow of high pressure and high temperature decomposition products 252. Examples of suitable mono-propellants include hydrazine and Otto fuel by way of non-limiting examples.

The stored energy module 208 includes one or more mono-propellant pressure vessel 246 and one or more pressurization gas pressure vessel 248. The one or more mono-propellant pressure vessel 246 is in fluid communication with the stored energy module conduit 114, and therethrough to the gas generator 240 and the decomposition chamber 242, and contains the mono-propellant 244. The one or more pressurization gas pressure vessel 248 is connected to the one or more mono-propellant pressure vessel 246, is in fluid communication therewith, and is in fluid communication therethrough with the stored energy module conduit 114 and the gas generator 240. The one or more pressurization gas pressure vessel 248 contains a pressurization gas 250, such as an inert gas like carbon dioxide or pure nitrogen by way of non-limiting example. The pressurization gas 250 is partially contained within the one or more mono-propellant pressure vessel 246 to pressurize, and thereby communicate according to the position of the diverter element 112, the mono-propellant 244 contained within the mono-propellant pressure vessel 246.

As shown in FIG. 4, while the diverter element 112 is in the first position A, the propellant selector valve 106 communicates the flow of the mono-propellant 244 to the decomposition chamber 242. The decomposition chamber 242 in turn decomposes the mono-propellant 244 to generate the flow of high temperature and high pressure decomposition products 252, which the turbine feed conduit 116 communicates to the turbine 122. The turbine 122 expands the high temperature and high pressure decomposition products 252, extracts work therefrom, and applies the extracted work to the generator 120 for generating the electric power P. This allows the power module 200 to generate the electric power P when the energy 28 (shown in FIG. 1) is unavailable from the scramjet engine 14 (shown in FIG. 1), such as when velocity of the vehicle 10 (shown in FIG. 1) is insufficient to pressurize and heat air within the inlet segment 18 (shown in FIG. 1) of the scramjet engine 14 to a level sufficient to power the turbo-generator 104.

As shown in FIG. 5, while the diverter element 112 is in the second position B the turbine flow control valve 106 fluidly separates the stored energy module 208 from the gas generator 240 and fluidly connects the bleed air conduit 110 to the turbine feed conduit 116. It is contemplated that the gas generator 240 be configured to convey the flow of the high temperature and high pressure air 130 to the turbine 122 of the turbo-generator 104 thereby generating the power P. This allows the power module 100 to generate the electric power P using the energy 28 (shown in FIG. 1) associated with the velocity of the vehicle 10 (shown in FIG. 1) when conditions within the scramjet engine 14 are suitable, such as while the vehicle 10 (shown in FIG. 1) is cruising at supersonic speeds and the turbo-generator 104 is not consuming the mono-propellant 244 contained within the stored energy module 208.

With reference to FIGS. 6 and 7, a power module 300 is shown. The power module 300 is similar to the power module 100 (shown in FIG. 1) and additionally includes a propellant selector valve 306, a stored energy module 308, and a gas generator 340 with a combustion chamber 342. The gas generator 340 is arranged along the turbine feed conduit 116, connects the propellant selector valve 306 to the turbine 122, and contains within its interior the combustion chamber 342. The combustion chamber 342 is configured and adapted to combust a bi-propellant 344 and an oxidizer 346 communicated to the combustion chamber 342 by the propellant selector valve 306. In this respect it is contemplated that the combustion chamber 342 be configured to oxidize the bi-propellant 344 (e.g., a fuel) and the oxidizer 346 communicated to the combustion chamber 342 by the stored energy module 308. Examples of suitable bi-propellants and oxidizers include kerosene-based fuels, such as JP-8, and nitrous oxide by way of non-limiting example.

The stored energy module 308 includes one or more bi-propellant pressure vessel 348, one or more oxidizer pressure vessel 350, and one or more pressurization gas pressure vessel 352. The one or more bi-propellant pressure vessel 348 is in fluid communication with a first stored energy module conduit 354, and therethrough to the gas generator 340 and the combustion chamber 342, and contains the bi-propellant 344. The one or more oxidizer pressure vessel 350 is in fluid communication with a second stored energy module conduit 356, and therethrough to the gas generator 340 and the combustion chamber 342, and contains the oxidizer 346. The one or more pressurization gas pressure vessel 352 is connected to both the one or more bi-propellant pressure vessel 348 and the one or more oxidizer pressure vessel 350, is in fluid communication therewith, and is in fluid communication therethrough with the propellant selector valve 306. The one or more pressurization gas pressure vessel 352 contains a pressurization gas 358, such as an inert gas like carbon dioxide or pure nitrogen by way of non-limiting example, for pressurizing the propellant 344 and the oxidizer 346 contained within the one or more bi-propellant pressure vessel 348 and the one or more oxidizer pressure vessel 350, respectively. It is contemplated that the pressurization gas 358 be partially contained within the one or more bi-propellant pressure vessel 348 and the one or more oxidizer pressure vessel 350 to drive the bi-propellant 344 and oxidizer 346 for provision to the gas generator 340 while the propellant selector valve 306 is in the first position A.

The propellant selector valve 306 has a shuttle diverter element 360. The shuttle diverter element 360 is similar to the diverter element 112, and is additionally arranged to connect both the first stored energy module conduit 354 and the second stored energy module conduit 356 to the gas generator 340 when in the first position A. As shown in FIG.6, while the shuttle diverter element 360 is in the first position A, a flow of the bi-propellant 344 and a flow of the oxidizer 346 are communicated by the propellant selector valve 306 to the gas generator 340. The gas generator 340 generates a flow of high pressure combustion products 362 using the flow of the bi-propellant 344 and the oxidizer 346, which the turbine feed conduit 116 provides to the turbine 122 of the turbo-generator 104 to generate electrical power P. This allows the power module 300 to generate electric power P when high temperature air and high pressure air is unavailable from the inlet segment 18 (shown in FIG. 1) of the scramjet engine 14 (shown in FIG. 1). This allows the propellant selector valve 306 to provide both a flow of the bi-propellant 344 and a flow of the oxidizer 346 to the gas generator 340, which generators a flow of high pressure combustion products 360 for communication to the turbine 122, from which the turbine 122 extracts mechanical work and communicates to the generator 120 for generate electrical power P.

As shown in FIG. 7, while the diverter element 112 is in the second position B, the propellant selector valve 306 fluidly couples the inlet segment 18 (shown in FIG. 1) of the scramjet engine 14 (shown in FIG. 1) to the turbine 122. Fluidly coupling the inlet segment 18 of the scramjet engine 14 to the turbine 122 causes the propellant selector valve 306 to communicate the flow of high temperature and high pressure air 130 to flow through the bleed air conduit 110 and turbine feed conduit 116 to the turbine 122, communicating the energy 28 (shown in FIG. 1) of the scramjet engine 14 to the turbine 122, and the turbo-generator 104 generating electric power P. This allows the power module 300 to generate the electric power using the energy 28 (shown in FIG. 1) associated with the velocity of the vehicle 10 (shown in FIG. 1) to generate the electrical power P when the high temperature and high pressure air within the inlet segment 18 of the scramjet engine 14 is suitable, such as during a cruise flight regime of the vehicle 10, without consuming the bi-propellant 344 and the oxidizer 346 within the stored energy module 308.

It is contemplated that the movement of the shuttle diverter element 360 between the first position A and the second position B be according to the flight regime of the vehicle 10 (shown in FIG. 1). In this respect, when the flight regime of the vehicle 10 does not generate high temperature and high pressure air within the inlet segment 18 (shown in FIG. 1) of the scramjet engine 14 (shown in FIG. 1) sufficient to provide the energy 28 (shown in FIG. 1) necessary to generate the electrical power P, such as during initial acceleration of a flight and during the terminal deceleration of the flight, the shuttle diverter element 306 assumes the first position A. When the flight regime of the vehicle 10 generates high temperature and high pressure air within the inlet segment 18 of the scramjet engine 14 (shown in FIG. 1) adequate to provide the energy needed to generate the electrical power P, such as during terminal acceleration, constant velocity flight, and during initial deceleration, the shuttle diverter element assumes the second position B. This allows the weight associated with the oxidizer 346 and fuel 344 contained within the energy storage module 308 to be limited to that required for subsonic flight of the vehicle 10 (shown in FIG. 1) while providing a flow of electrical power throughout the flight, increasing the payload and/or range of the vehicle 10.

With reference to FIG. 8, a chart 400 of velocity versus flight time is shown for a flight of a vehicle, e.g., the vehicle 10 (shown in FIG. 1). The chart 400 has a trace 402 showing cooperation of scramjet engine energy and stored energy module energy by a power module, e.g., the power module 100 (shown in FIG. 1), to generate electrical power during flight of the vehicle 10. As shown in region 404, electrical power is generated using the energy 30 (shown in FIG. 1) provided by the stored energy module 108 during the initial acceleration of the vehicle 10 by placing the diverter element 112 (shown in FIG. 2) in the first position A. Power generation continues using the energy 30 until the energy level within the inlet segment 18 (shown in FIG. 1) of the scramjet engine 14 (shown in FIG. 1) reaches a predetermined energy level 406, as indicated the vehicle velocity. Once the predetermined energy level 406 is reached the diverter element 112 moves to the second position B, and power generation is thereafter accomplished using the energy 28 (shown in FIG. 1) provided by the scramjet engine 14, as shown with region 408. Power generation continues using the energy 28 until the energy level within the inlet segment 18 drops below the predetermined energy level 406, as shown with region 410, at which point the diverter element 112 moves to the first position A, and power generation is accomplished using energy provided by the stored energy module 108.

In certain embodiments the diverter element 112 can be passively shuttled. For example, the diverter can move between the first position A and the second position B according to differential pressure (if the energy storage pressure is higher than the scramjet pressure, the delta pressure, between the energy storage pressure and the scramjet pressure, forces the valve to the energy storage open position, but as the scramjet pressure rises, it pushes against the energy storage pressure force, once the scramjet pressure exceeds the energy storage pressure, the valve is shuttled by the differential pressure between the two pressures to passively select the scramjet source).

With reference to FIG. 9, a method of generating electrical power is shown. As shown with box 510, a determination is made with respect to the energy available within the inlet segment of a scramjet engine, e.g., within the inlet segment 18 (shown in FIG. 1) of the scramjet engine 14 (shown in FIG. 1). When the energy level is below a predetermined level, a stored energy module, e.g., the stored energy module 108 (shown in FIG. 2), is placed in fluid communication with a turbo-generator, e.g., the turbo-generator 104 (shown in FIG. 2), as shown with box 520. It is contemplated that fluid communication between the stored energy module 108 and the turbo-generator be accomplished by moving a diverter element of a propellant selector valve, e.g., the diverter element 112 (shown in FIG. 2) of the propellant selector valve 106 (shown in FIG. 2), to a first position, e.g., the first position A (shown in FIG. 2), as also shown with box 520. The diverter element is moved to the first position when the energy level is below a predetermined level, as shown with box 522. Movement of the diverter element can be according to the speed of a vehicle, e.g., of the vehicle 10, as shown with box 524. Electrical power is thereafter generated for the vehicle using energy provided by the stored energy module, as shown with box 530.

As shown with box 540, when the energy level is above the predetermined level the bleed air conduit is placed in fluid communication with the turbo-generator. The bleed air conduit is placed in fluid communication with the turbo-generator by moving the diverter element to the second position, e.g., the second position B (shown in FIG. 3) when the energy level is above the predetermined level, as shown with box 542, and electrical power generated using energy provided by the inlet segment of the scramjet engine through the bleed conduit, as shown with box 550.

Hypersonic propulsion systems, such as scramjet engines are commonly employed to propel vehicles at hypersonic speeds, typically without the use of rotary elements like gas turbine engine cores and crankshafts on internal combustion engines. While it can simplify the operation of such engines, the absence of a source of mechanical rotation means that electrical power need be provided by a dedicated source of mechanical rotation and a dedicated source of energy. The advantages associated with having a source of electrical power on such aircraft generally justifies the loss of payload space and weight by the energy source carried by such vehicles for power generation.

In embodiments described herein the energy carried by the vehicle for electrical power generation is augmented by the energy available from the movement of the vehicle. In this respect energy from a stored energy module carried by the vehicle is utilized during flight regimes where energy is unavailable from the engine for electrical power generation, such as during initial acceleration to hypersonic speed and during the terminal portion of deceleration from hypersonic speed at the end of a flight. Between these intervals, e.g., during the terminal portion of acceleration to hypersonic flight, flight at hypersonic speeds, and the initial portion of deceleration from hypersonic speed, energy provided by the engine is used to generate electric power. This reduces the amount of compressed gas, mono-propellant, and/or bi-propellant and oxidizer that the vehicle must carry to generate electrical power during flight, available space and weight for vehicle payload and/or flight duration commensurately increasing.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it is intended that the present disclosure is not be limited to the particular embodiment disclosed as the best mode contemplated for carrying out this present disclosure, but that the present disclosure will include all embodiments falling within the scope of the claims.

## Claims

1. A power module for hypersonic vehicles with a scramjet engine, comprising:
a turbo-generator (104) with a propellant selector valve (106);
a stored energy module (208) connected to the propellant selector valve; and
a bleed air conduit (110) connected to the propellant selector valve, wherein the propellant selector valve has a diverter element with a first position and a second position, the stored energy module in fluid communication with the turbo-generator in the first position, and the bleed air conduit in fluid communication with the turbo-generator in the second position and configured to generate electrical power with the turbo-generator using energy provided by an inlet segment of the scramjet engine through the bleed air conduit, and **characterised in that** the propellant selector valve is configured to move between the first position and the second position according to energy within the inlet segment of the scramjet engine, or wherein the propellant selector valve is configured to move from the first position to the second position when energy within the 2. arr inlet segment of the scramjet engine exceeds a predetermined value.

2. The power module as recited in claim 1, further comprising a scramjet engine connected to the propellant selector valve by the bleed air conduit, wherein the scramjet engine has an inlet segment with a bleed port in fluid communication with a nozzle segment through a combustor segment and an isolator segment, wherein the bleed port is in fluid communication with the bleed air conduit.

3. The power module as recited in any preceding claim, further comprising a gas generator connecting the propellant selector valve to the turbo-generator.

4. The power module as recited in claim 3, wherein the gas generator comprises a decomposition chamber for decomposing a mono-propellant, or wherein the gas generator comprises a combustion chamber for combusting a bi-propellant with an oxidizer.

5. The power module as recited in any preceding claim, wherein the stored energy module comprises a pressure vessel, wherein the pressure vessel is connected to the propellant selector valve.

6. The power module as recited in claim 5, wherein the stored energy module further comprises a compressed gas contained within the pressure vessel, or wherein the stored energy module further comprises:
a mono-propellant contained within the pressure vessel; and
a pressurization gas contained within the pressure vessel, wherein the pressurization gas pressurizes the mono-propellant to urge the mono-propellant toward the propellant selector valve, or wherein the pressure vessel is a bi-propellant pressure vessel, the stored energy module further comprising:
a bi-propellant contained within the bi-propellant pressure vessel;
a pressurization gas pressure vessel connected to the bi-propellant pressure vessel and therethrough in fluid communication with the propellant selector valve; and
a pressurization gas contained in the pressurization gas pressure vessel and the bi-propellant pressure vessel and the bi-propellant pressure vessel, the pressurization gas urging the bi-propellant toward the propellant selector valve.

7. The power module as recited in claim 5, wherein the pressure vessel is a bi-propellant pressure vessel, the stored energy module further comprising:
an oxidizer pressure vessel connected to the propellant selector valve;
a pressurization gas pressure vessel connected to the oxidizer pressure vessel and the bi-propellant pressure vessel, the pressurization gas pressure vessel in fluid communication with the turbine speed control valve through both the pressurization gas pressure vessel and the oxidizer pressure vessel.

8. The power module as recited in any preceding claim, wherein the turbo-generator comprises:
a turbine connected to the propellant selector valve;
an interconnect shaft connected to the turbine;
a permanent magnet generator operably connected to the turbine by the interconnect shaft.

9. A vehicle, comprising:
an airframe carrying a scramjet engine and a power module as recited in any preceding claim, wherein the scramjet engine is connected to the propellant selector valve by the bleed air conduit;
wherein the stored energy module comprises a pressure vessel, wherein the pressure vessel is connected to the propellant selector valve; and
wherein the propellant selector valve is configured to move from the first position to the second position when energy within an inlet segment of the scramjet engine exceeds a predetermined value.

10. The vehicle as recited in claim 9, further comprising a compressed gas, a mono-propellant and a pressurization gas, or a bi-propellant and a pressurization gas contained within the pressure vessel.

11. A method of generating electrical power, comprising:
at a turbo-generator (104) with a propellant selector valve (106), a stored energy module (208) connected to the propellant selector valve, and a bleed air conduit (110) connected to the propellant selector valve having a diverter element with a first position and a second position,
placing the stored energy module in fluid communication with the turbo-generator by moving the diverter element to the first position;
generating electrical power with the turbo-generator using energy provided by the stored energy module;
placing the bleed air conduit in fluid communication with the bleed air conduit by moving the diverter element to the second position; and
generating electrical power with the turbo-generator using energy provided by an inlet segment of a scramjet engine through the bleed air conduit, and **characterised in that** the method further comprises:
determining an energy level within the inlet segment of the scramjet engine;
moving the diverter element to the first position when the energy level is below a predetermined level; and
moving the diverter element to the second position when the energy level is above the predetermined level.

12. The method as recited in claim 11, wherein the diverter element is moved between the first position and the second position based on speed of a vehicle carrying the power module.

## Patentansprüche

1. Leistungsmodul für Hyperschallfahrzeuge mit einem Scramjet-Triebwerk, umfassend:
einen Turbogenerator (104) mit einem Treibstoffwahlventil (106); ein Speicherenergiemodul (208), das mit dem Treibstoffwahlventil verbunden ist; und
eine Zapfluftleitung (110), die mit dem Treibstoffwahlventil verbunden ist, wobei das Treibstoffwahlventil ein Umlenkelement mit einer ersten Position und einer zweiten Position aufweist, wobei das Speicherenergiemodul in der ersten Position in Fluidverbindung mit dem Turbogenerator steht, und wobei die Zapfluftleitung in der zweiten Position in Fluidverbindung mit dem Turbogenerator steht und zum Erzeugen von elektrischem Strom mit dem Turbogenerator unter Verwendung von Energie, die von einem Einlasssegment des Scramjet-Triebwerks durch die Zapfluftleitung bereitgestellt wird, konfiguriert ist, und **dadurch gekennzeichnet, dass** das Treibstoffwahlventil zum Bewegen zwischen der ersten Position und der zweiten Position entsprechend von Energie innerhalb des Einlasssegments des Scramjet-Triebwerks konfiguriert ist oder wobei das Treibstoffwahlventil zum Bewegen von der ersten Position in die zweite Position konfiguriert ist, wenn Energie innerhalb des Einlasssegments des Scramjet-Triebwerks einen vorbestimmten Wert überschreitet.

2. Leistungsmodul nach Anspruch 1, ferner umfassend ein Scramjet-Triebwerk, das durch die Zapfluftleitung mit dem Treibstoffwahlventil verbunden ist, wobei das Scramjet-Triebwerk ein Einlasssegment mit einer Zapföffnung in Fluidverbindung mit einem Düsensegment durch ein Brennkammersegment und ein Isolatorsegment aufweist, wobei die Zapföffnung in Fluidverbindung mit der Zapfluftleitung steht.

3. Leistungsmodul nach einem der vorhergehenden Ansprüche, ferner umfassend einen Gasgenerator, der das Treibstoffwahlventil mit dem Turbogenerator verbindet.

4. Leistungsmodul nach Anspruch 3, wobei der Gasgenerator eine Zersetzungskammer zum Zersetzen eines Einkomponenten-Treibstoffs umfasst oder wobei der Gasgenerator eine Brennkammer zum Verbrennen eines Zweikomponenten-Treibstoffs mit einem Oxidator umfasst.

5. Leistungsmodul nach einem der vorhergehenden Ansprüche, wobei das Speicherenergiemodul einen Druckbehälter umfasst, wobei der Druckbehälter mit dem Treibstoffwahlventil verbunden ist.

6. Leistungsmodul nach Anspruch 5, wobei das Speicherenergiemodul ferner ein in dem Druckbehälter enthaltenes Druckgas umfasst oder wobei das Speicherenergiemodul ferner Folgendes umfasst:
einen in dem Druckbehälter enthaltenen Einkomponenten-Treibstoff; und
ein in dem Druckbehälter enthaltenes Druckgas, wobei das Druckgas den Einkomponenten-Treibstoff unter Druck setzt, um den Einkomponenten-Treibstoff in Richtung des Treibstoffwahlventils zu zwingen, oder wobei der Druckbehälter ein Druckbehälter für Zweikomponenten-Treibstoff ist, wobei das Speicherenergiemodul ferner Folgendes umfasst:
einen in dem Druckbehälter für Zweikomponenten-Treibstoff enthaltenen Zweikomponenten-Treibstoff;
einen Druckgasdruckbehälter, der mit dem Druckbehälter für Zweikomponenten-Treibstoff verbunden ist und darüber in Fluidverbindung mit dem Treibstoffwahlventil steht; und
ein in dem Druckgasdruckbehälter und in dem Druckbehälter für Zweikomponenten-Treibstoff enthaltenes Druckgas, wobei das Druckgas den Zweikomponenten-Treibstoff in Richtung des Treibstoffwahlventils zwingt.

7. Leistungsmodul nach Anspruch 5, wobei der Druckbehälter ein Druckbehälter für Zweikomponenten-Treibstoff ist und das Speicherenergiemodul ferner Folgendes umfasst:
einen Oxidatordruckbehälter, der mit dem Treibstoffwahlventil verbunden ist;
einen Druckgasdruckbehälter, der mit dem Oxidatordruckbehälter und dem Druckbehälter für Zweikomponenten-Treibstoff verbunden ist, wobei der Druckgasdruckbehälter sowohl durch den Druckgasdruckbehälter als auch den Oxidatordruckbehälter in Fluidverbindung mit dem Turbinendrehzahlsteuerventil steht.

8. Leistungsmodul nach einem der vorhergehenden Ansprüche, wobei der Turbogenerator Folgendes umfasst:
eine Turbine, die mit dem Treibstoffwahlventil verbunden ist;
eine Verbindungswelle, die mit der Turbine verbunden ist;
einen Permanentmagnetgenerator, der durch die Verbindungswelle wirksam mit der Turbine verbunden ist.

9. Fahrzeug, umfassend:
ein Flugwerk, das ein Scramjet-Triebwerk und ein Leistungsmodul nach einem der vorhergehenden Ansprüche trägt, wobei das Scramjet-Triebwerk durch die Zapfluftleitung mit dem Treibstoffwahlventil verbunden ist;
wobei das Speicherenergiemodul einen Druckbehälter umfasst, wobei der Druckbehälter mit dem Treibstoffwahlventil verbunden ist; und
wobei das Treibstoffwahlventil zum Bewegen von der ersten Position in die zweite Position konfiguriert ist, wenn die Energie innerhalb eines Einlasssegments des Scramjet-Triebwerks einen vorbestimmten Wert überschreitet.

10. Fahrzeug nach Anspruch 9, ferner umfassend ein komprimiertes Gas, einen Einkomponenten-Treibstoff und ein Druckgas oder einen Zweikomponenten-Treibstoff und ein Druckgas, die in dem Druckbehälter enthalten sind.

11. Verfahren zum Erzeugen von elektrischem Strom, umfassend:
in einem Turbogenerator (104) mit einem Treibstoffwahlventil (106), einem Speicherenergiemodul (208), das mit dem Treibstoffwahlventil verbunden ist, und einer Zapfluftleitung (110), die mit dem Treibstoffwahlventil verbunden ist, das ein Umlenkelement mit einer ersten Position und einer zweiten Position aufweist,
Versetzen des Speicherenergiemoduls in Fluidkommunikation mit dem Turbogenerator durch Bewegen des Umlenkelements in die erste Position;
Erzeugen von elektrischem Strom mit dem Turbogenerator unter Verwendung von Energie, die von dem Speicherenergiemodul bereitgestellt wird;
Versetzen der Zapfluftleitung in Fluidverbindung mit der Zapfluftleitung durch Bewegen des Umlenkelements in die zweite Position; und
Erzeugen von elektrischem Strom mit dem Turbogenerator unter Verwendung von Energie, die von einem Einlasssegment eines Scramjet-Triebwerks durch die Zapfluftleitung bereitgestellt wird, und **dadurch gekennzeichnet, dass** das Verfahren ferner Folgendes umfasst:
Bestimmen eines Energieniveaus innerhalb des Einlasssegments des Scramjet-Triebwerks;
Bewegen des Umlenkelements in die erste Position, wenn das Energieniveau unter einem vorbestimmten Niveau liegt; und
Bewegen des Umlenkelements in die zweite Position, wenn das Energieniveau über dem vorbestimmten Niveau liegt.

12. Verfahren nach Anspruch 11, wobei das Umlenkelement basierend auf einer Geschwindigkeit eines das Leistungsmodul tragenden Fahrzeugs zwischen der ersten Position und der zweiten Position bewegt wird.

## Revendications

1. Module de puissance pour véhicules hypersoniques à moteur hypersonique, comprenant :
un turbogénérateur (104) doté d'une soupape de sélection de propergol (106) ;
un module d'énergie stockée (208) relié à la soupape de sélection de propergol ; et
un conduit d'air de purge (110) relié à la soupape de sélection de propergol, dans lequel la soupape de sélection de propergol présente un élément de dérivation doté d'une première position et d'une seconde position, au module d'énergie stockée en communication fluidique avec le turbogénérateur dans la première position, et au conduit d'air de purge en communication fluidique avec le turbogénérateur dans la seconde position et conçu pour générer de l'énergie électrique avec le turbogénérateur en utilisant l'énergie fournie par un segment d'entrée du moteur hypersonique à travers le conduit d'air de purge, et **caractérisé en ce que** la soupape de sélection de propergol est conçue pour basculer entre la première position et la seconde position en fonction de l'énergie à l'intérieur du segment d'entrée du moteur hypersonique, ou dans lequel la soupape de sélection de propergol est conçue pour basculer de la première position à la seconde position lorsque l'énergie à l'intérieur du segment d'entrée du moteur hypersonique dépasse une valeur prédéterminée.

2. Module de puissance selon la revendication 1, comprenant en outre un moteur hypersonique relié à la soupape de sélection de propergol par le conduit d'air de purge, dans lequel le moteur hypersonique présente un segment d'entrée doté d'un orifice de purge en communication fluidique avec un segment de buse à travers un segment de chambre de combustion et un segment isolateur, dans lequel l'orifice de purge est en communication fluidique avec le conduit d'air de purge.

3. Module de puissance selon une quelconque revendication précédente, comprenant en outre un générateur de gaz reliant la soupape de sélection de propergol au turbogénérateur.

4. Module de puissance selon la revendication 3, dans lequel le générateur de gaz comprend une chambre de décomposition pour décomposer un monergol, ou dans lequel le générateur de gaz comprend une chambre de combustion pour brûler un biergol avec un comburant.

5. Module de puissance selon une quelconque revendication précédente, dans lequel le module d'énergie stockée comprend un récipient sous pression, dans lequel le récipient sous pression est relié à la soupape de sélection de propergol.

6. Module de puissance selon la revendication 5, dans lequel le module d'énergie stockée comprend en outre un gaz comprimé contenu à l'intérieur du récipient sous pression, ou dans lequel le module d'énergie stockée comprend en outre :
un monergol contenu à l'intérieur du récipient sous pression ; et
un gaz de pressurisation contenu à l'intérieur du récipient sous pression, dans lequel le gaz de pressurisation met sous pression le monergol pour pousser le monergol vers la soupape de sélection de propergol, ou dans lequel le récipient sous pression est un récipient sous pression de biergol, le module d'énergie stockée comprenant en outre :
un biergol contenu à l'intérieur du récipient sous pression de biergol ;
un récipient sous pression de gaz de pressurisation relié au récipient sous pression de biergol et à travers celui-ci en communication fluidique avec la soupape de sélection de propergol ; et
un gaz de pressurisation contenu dans le récipient sous pression de gaz de pressurisation et le récipient sous pression de biergol et le récipient sous pression de biergol, le gaz de pressurisation poussant le biergol vers la soupape de sélection de propergol.

7. Module de puissance selon la revendication 5, dans lequel le récipient sous pression est un récipient sous pression de biergol, le module d'énergie stockée comprenant en outre :
un récipient sous pression de comburant relié à la soupape de sélection de propergol ;
un récipient sous pression de gaz de pressurisation relié au récipient sous pression de comburant et au récipient sous pression de biergol, le récipient sous pression de gaz de pressurisation étant en communication fluidique avec la soupape de commande de vitesse de turbine à travers à la fois le récipient sous pression de gaz de pressurisation et le récipient sous pression de comburant.

8. Module de puissance selon une quelconque revendication précédente, dans lequel le turbogénérateur comprend :
une turbine reliée à la soupape de sélection de propergol ;
un arbre d'interconnexion relié à la turbine ;
un générateur à aimant permanent relié de manière fonctionnelle à la turbine par l'arbre d'interconnexion.

9. Véhicule, comprenant :
un fuselage transportant un moteur hypersonique et un module de puissance selon une quelconque revendication précédente, dans lequel le moteur hypersonique est relié à la soupape de sélection de propergol par le conduit d'air de purge ;
dans lequel le module d'énergie stockée comprend un récipient sous pression, dans lequel le récipient sous pression est relié à la soupape de sélection de propergol ; et
dans lequel la soupape de sélection de propergol est conçue pour basculer de la première position à la seconde position lorsque l'énergie à l'intérieur d'un segment d'entrée du moteur hypersonique dépasse une valeur prédéterminée.

10. Véhicule selon la revendication 9, comprenant en outre un gaz comprimé, un monergol et un gaz de pressurisation, ou un biergol et un gaz de pressurisation contenus à l'intérieur du récipient sous pression.

11. Procédé de génération d'énergie électrique, comprenant :
au niveau d'un turbogénérateur (104) doté d'une soupape de sélection de propergol (106), un module d'énergie stockée (208) relié à la soupape de sélection de propergol, et un conduit d'air de purge (110) relié à la soupape de sélection de propergol présentant un élément de dérivation doté d'une première position et une seconde position,
la mise en communication fluidique du module d'énergie stockée avec le turbogénérateur en basculant l'élément de dérivation vers la première position ;
la génération de l'énergie électrique avec le turbogénérateur en utilisant l'énergie fournie par le module d'énergie stockée ;
la mise en communication fluidique du conduit d'air de purge avec le conduit d'air de purge en basculant l'élément de dérivation vers la seconde position ; et
la génération de l'énergie électrique avec le turbogénérateur en utilisant l'énergie fournie par un segment d'entrée d'un moteur hypersonique à travers le conduit d'air de purge, et
**caractérisé en ce que** le procédé comprend en outre :
la détermination d'un niveau d'énergie à l'intérieur du segment d'entrée du moteur hypersonique ;
le basculement de l'élément de dérivation vers la première position lorsque le niveau d'énergie est inférieur à un niveau prédéterminé ; et
le basculement de l'élément de dérivation vers la seconde position lorsque le niveau d'énergie est supérieur au niveau prédéterminé.

12. Procédé selon la revendication 11, dans lequel l'élément de dérivation bascule entre la première position et la seconde position sur la base de la vitesse d'un véhicule transportant le module de puissance.
